# FASCICULE DE BREVET EUROPEEN

(11) **EP 2 456 665 B1**
(45) Date de publication et mention de la délivrance du brevet: **23.10.2013**
(21) Numéro de dépôt: 10752050.4
(22) Date de dépôt: 20.07.2010
(51) Int. Cl.: B64C 11/06, F01D 5/30, F04D 29/36, F04D 29/34

(54) **DISPOSITIF DE RETENUE D'AUBE POUR HELICE DE TURBOMACHINE.**
PROPELLERBLATTRÜCKHALTEVORRICHTUNG
BLADE RETENTION SYSTEM FOR TURBOPROP

(30) Priorité: 22.07.2009 FR 0955088
(43) Date de publication de la demande: 30.05.2012
(73) Titulaire: Airbus Operations, 31060 Toulouse (FR)
(72) Inventeur: LAFONT, Laurent, 31320 Pechbusque (FR)
(74) Mandataire: Ilgart, Jean-Christophe
(86) Numéro de dépôt international: PCT/FR2010/051523
(87) Numéro de publication internationale: WO 2011/010059

(56) Documents cités:
- US-A- 2 660 252
- US-A- 3 303 889

## Description

### DOMAINE TECHNIQUE

La présente invention se rapporte à une hélice de turbomachine d'aéronef formée d'un ensemble d'aubes montées sur un support rotatif. L'invention concerne plus particulièrement un dispositif de retenue d'aube sur ledit support.

### ETAT DE LA TECHNIQUE ANTERIEURE

Classiquement, une turbomachine à hélices de type à « open rotor » comprend deux hélices contrarotatives présentant chacune une pluralité d'aubes.

La turbomachine comprend habituellement une turbine libre à deux rotors contrarotatifs, chaque rotor entraînant en rotation autour de l'axe de rotation de l'hélice un support rotatif sur lequel sont montées les aubes de l'une des hélices.

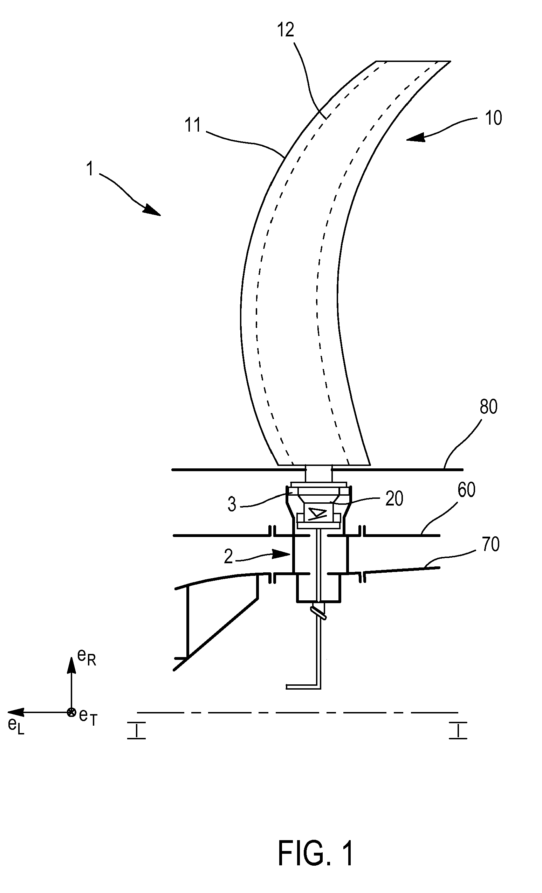

Sur la figure 1 est illustré en coupe longitudinale selon l'axe de rotation de l'hélice un exemple d'une partie d'hélice comportant une aube 1 montée sur un moyeu 2 d'hélice.

Il est à noter que l'axe de rotation I-I de l'hélice coïncide ici avec l'axe moteur. Par la suite, on définit un repère orthogonal direct en coordonnées cylindriques (e_{L}, e_{R}, e_{T}) où e_{L} est la direction longitudinale correspondant à l'axe de rotation I-I de l'hélice et orientée dans la direction d'avancement de l'aéronef du fait de la poussée de la turbomachine, e_{R} est la direction radiale d'un point appartenant à la turbomachine, et e_{T} est la direction tangentielle ou circonférentielle en ce point.

Dans la suite de la description, les termes « supérieur », « inférieur » sont à comprendre en termes de distance par rapport à l'axe de rotation I-I de l'hélice.

De plus, les expressions « vers l'extérieur» et « vers l'intérieur » sont à comprendre comme un éloignement radial ou un rapprochement radial vis-à-vis de l'axe de rotation I-I de l'hélice.

Enfin, les termes « avant » et « arrière » font référence à la direction d'avancement de l'aéronef résultant de la poussée de la turbomachine, cette direction étant représentée par la flèche e_{L}.

L'aube 1 comprend une pale 10 qui prolonge un pied d'aube 20 monté sur ledit moyeu 2 d'hélice.

Le moyeu 2 est une pièce sensiblement annulaire. Il comporte une pluralité d'orifices traversants suivant la direction radiale e_{R}, chaque orifice logeant le pied de l'aube correspondante.

Ladite pale 10 est située de manière à être en contact avec l'air environnant de la turbomachine et s'étend suivant une direction sensiblement parallèle à e_{R}. La pale 10 est délimitée par une coque 11 dont la forme générale présente un profil aérodynamique. La coque 11 enveloppe une âme structurale creuse 12 qui s'étend suivant une direction sensiblement parallèle à e_{R}.

Le pied d'aube 20 est monté pivotant autour d'un axe secondaire parallèle à la direction radiale e_{R} sur le moyeu 2, le mouvement pivotant étant assuré par un système à roulement à billes 3.

Le moyeu d'hélice 2 est bridé entre deux carters coaxiaux, un carter central 60 et un carter inférieur 70, qui délimitent ensemble une veine de flux d'air chaud, et rotatif par rapport à ceux-ci. Un carter supérieur 80 est également prévu qui entoure lesdits carters 60, 70 et le moyeu 2. Il délimite le profil aérodynamique de la turbomachine.

Une hélice selon cet exemple de l'art antérieur présente néanmoins certains inconvénients.

L'aube est en général maintenue au niveau du moyeu par des moyens classiques de maintien. Or, dans le cas de l'impact d'un corps étranger contre la pale, tel qu'un oiseau ou un grêlon, ou encore le développement d'une fissure de fatigue ou d'un point de corrosion, le risque de désolidarisation d'une partie de l'aube ou de la totalité de celle-ci est particulièrement élevé, ce que ne peuvent éviter lesdits moyens classiques de maintien.

La partie libérée peut alors heurter le fuselage de l'aéronef ou les pales voisines, et provoquer des dégâts d'autant plus importants que la masse des débris est grande. Il est à noter que le pied forme la partie la plus massive de l'aube.

L'hélice selon la réalisation de l'art antérieur décrite ci-dessus ne permet pas de minimiser les risques de perte de l'aube en général et en particulier du pied de celle-ci.

L'état de l'art est également illustré par le document US-A-2 660 252.

### EXPOSE DE L'INVENTION

L'invention a principalement pour but de présenter une hélice de turbomachine d'aéronef remédiant au moins en partie aux inconvénients mentionnés ci-dessus relatifs à la réalisation de l'art antérieur décrite en référence à la figure 1.

Pour ce faire, l'invention a pour objet une hélice de turbomachine d'aéronef, comportant une pluralité d'aubes comprenant chacune un pied monté sur un moyeu rotatif autour d'un axe de rotation de l'hélice.

Selon l'invention, au moins une aube comprend un logement débouchant radialement vers l'intérieur au niveau du pied de celle-ci. De plus, ladite hélice comprend, en association avec ledit logement, un dispositif de retenue d'aube, fixe en translation dans une direction radiale vers l'extérieur par rapport audit moyeu, comprenant des moyens mobiles de retenue situés dans ledit logement et aptes à occuper :
- une position rétractée dans laquelle lesdits moyens mobiles de retenue ne forment pas butée pour ladite aube dans ladite direction radiale vers l'extérieur, et
- une position déployée dans laquelle lesdits moyens mobiles de retenue forment butée pour ladite aube dans ladite direction radiale vers l'extérieur ;
et à être déplacés de l'une à l'autre desdites positions.

Selon le mode de réalisation préféré de l'invention, lesdits moyens mobiles de retenue sont aptes à être déplacés de ladite position rétractée à ladite position déployée par la force centrifuge résultant de la rotation de l'aube autour dudit axe de rotation de l'hélice.

Dans leur configuration en position déployée, les moyens mobiles de retenue présentent un écartement transversal par rapport à la direction radiale plus important que dans leur configuration en position rétractée.

Ainsi, par position déployée, on entend une position dans laquelle les moyens mobiles de retenue présentent un écartement transversal par rapport à la direction radiale plus important que dans leur configuration en position rétractée.

Par écartement transversal, on entend un éloignement relatif moyen des moyens mobiles les uns par rapport aux autres dans un sens transversal par rapport à la direction radiale. L'éloignement moyen est à comprendre en termes de distance entre les centres de gravité des moyens mobiles de retenue.

Ainsi, les moyens mobiles de retenue, lorsqu'ils occupent la position déployée, peuvent présenter une surface apparente plus importante que celle qu'ils présentent dans leur position rétractée. La surface apparente peut être définie suivant ladite direction radiale par rapport au moyeu.

Ainsi, l'invention procure un dispositif supplémentaire permettant de retenir, dans certaines conditions, l'ensemble de l'aube ou une partie de celle-ci dans une position radiale déterminée par rapport à l'axe de rotation de l'hélice.

En effet, en condition normale de fonctionnement de l'hélice, le maintien de l'aube sur le moyeu en sa position radiale est assuré par les moyens classiques, ou primaires, de maintien de l'aube.

En cas de rupture d'une partie ou de la totalité de l'aube, du moyeu lui-même, et/ou des moyens primaires de maintien, et lorsque l'hélice est en rotation, le dispositif de retenue empêche que l'ensemble de l'aube ou une partie de celle-ci ne se désolidarise de l'hélice et quitte ladite position radiale de fonctionnement pour aller heurter le fuselage de l'aéronef ou les aubes voisines.

Le dispositif de retenue selon l'invention présente la particularité de pouvoir être actif ou inactif, selon que les moyens mobiles de retenue sont, respectivement, en position déployée ou en position rétractée.

Lorsque le dispositif de retenue selon l'invention est actif, les moyens mobiles de retenue forment butée pour ladite aube dans la direction radiale vers l'extérieur. Ladite butée peut être, ou non, opérante.

En condition normale de fonctionnement, la butée formée par les moyens mobiles de retenue n'est pas effective, ou opérante, dans la mesure où l'aube reste maintenue par les moyens primaires de maintien de l'aube en sa position radiale sur le moyeu.

Ladite butée devient opérante lorsque l'aube, à la suite d'un choc, d'une rupture du moyeu ou des moyens primaires de maintien, ou similaire, subit une sollicitation en déplacement suivant la direction radiale vers l'extérieur.

L'ensemble de l'aube ou une partie de celle-ci est alors retenu(e) par le dispositif de retenue selon l'invention, en particulier par la butée formée par les moyens mobiles de retenue.

Il est à noter que l'activation du dispositif de retenue est assurée de manière automatique, ou passive, par simple rotation de l'hélice créant ladite force centrifuge.

L'activation peut être obtenue lorsque la vitesse de rotation de l'hélice, ou vitesse de rotation de l'aube autour de l'axe de rotation de l'hélice, atteint une valeur prédéterminée. Cette valeur prédéterminée peut correspondre à la vitesse de rotation de l'hélice en régime de croisière de l'aéronef, voire à une faible vitesse de bas régime, par exemple lorsque l'aéronef est en déplacement au sol.

Aussi, il n'est pas nécessaire de prévoir de moyens spécifiques dédiés à l'activation du dispositif de retenue.

Par ailleurs, lorsque le dispositif de retenue selon l'invention est inactif, les moyens mobiles de retenue ne forment pas butée pour l'aube dans la direction radiale vers l'extérieur. Aussi, le dispositif de retenue peut être engagé dans le logement ou désengagé sans difficulté, par exemple lors d'opérations de maintenance.

Enfin, les moyens mobiles de retenue du dispositif de retenue selon l'invention sont situés dans le logement. Le dispositif de retenue ne comporte donc pas d'éléments débouchant au niveau de la coque de la pale, qui entraînent nécessairement une modification locale du profil aérodynamique de la pale. Le dispositif de retenue selon l'invention n'induit aucune modification du profil extérieur de l'aube, ce qui préserve les propriétés aérodynamiques de celle-ci.

Selon le mode de réalisation préféré, ledit logement est délimité par une surface interne présentant au moins une surface de butée. Lesdits moyens mobiles de retenue comprennent au moins une portion de butée, ladite portion de butée étant au moins partiellement en regard de ladite surface de butée lorsque les moyens mobiles de retenue sont en position déployée.

De préférence, ladite surface interne comporte au moins deux surfaces de butée, et lesdits moyens mobiles de retenue comprennent au moins deux parties mobiles articulées l'une à l'autre présentant chacune une portion de butée.

Le dispositif de retenue comprend une tige de retenue sur laquelle sont montés mobiles lesdits moyens mobiles de retenue, ladite tige de retenue étant fixe en translation dans ladite direction radiale vers l'extérieur par rapport audit moyeu.

Ledit dispositif de retenue peut comprendre une tige de retenue à laquelle lesdites parties mobiles sont assemblées par un axe, de sorte que lesdites parties mobiles sont simultanément contrarotatives autour dudit axe lors du déplacement de ladite position rétractée à ladite position déployée.

Avantageusement, un fourreau de protection est disposé dans ledit logement, dont la surface intérieure participe à délimiter ledit logement et comprend ladite ou lesdites surfaces de butée. Ledit fourreau peut définir une zone de retenue dudit logement. Les moyens mobiles de retenue peuvent être situés dans ladite zone de retenue pour coopérer avec les surfaces de butée.

Avantageusement, le dispositif de retenue comprend des moyens élastiques de rappel desdits moyens mobiles de retenue dans ladite position rétractée. Ainsi, lorsque la vitesse de rotation de l'hélice est nulle ou insuffisante pour activer le dispositif de retenue, les moyens élastiques de rappel maintiennent les moyens mobiles de retenue dans la position rétractée. De la même manière, lorsque la vitesse de rotation de l'hélice est insuffisante pour maintenir activé le dispositif de retenue selon l'invention, les moyens élastiques de rappel provoquent le déplacement desdits moyens mobiles de retenue de la position déployée dans la position rétractée.

Avantageusement, le dispositif de retenue présente, au niveau desdits moyens mobiles en position rétractée, une dimension maximale suivant la direction transversale sensiblement inférieure à la dimension minimale dudit logement suivant ladite direction transversale. Ainsi, le dispositif de retenue ne présente aucune difficulté à être engagé dans ou désengagé du logement de l'aube. Les opérations de réalisation de l'hélice ou de maintenance de celle-ci peuvent être effectuées sans complications causées par le dispositif de retenue.

L'hélice comprend un support de moyeu d'hélice disposé vers l'intérieur par rapport audit moyeu d'hélice. Ledit dispositif de retenue peut être monté en une extrémité inférieure sur ledit moyeu d'hélice ou sur ledit support de moyeu d'hélice, de manière à éviter tout déplacement sensiblement radial vers l'extérieur dudit dispositif de retenue.

Dans le cas où le dispositif de retenue est monté sur le carter inférieur formant support de moyeu, le dispositif de retenue permet d'assurer également la retenue du moyeu d'hélice, en même temps que la retenue de l'aube.

L'invention porte également sur une turbomachine d'aéronef comprenant au moins une hélice selon l'une quelconque des caractéristiques précédentes.

L'invention porte enfin sur un aéronef comprenant au moins une turbomachine selon la caractéristique précédente.

D'autres avantages et caractéristiques de l'invention apparaîtront dans la description détaillée non limitative ci-dessous.

### BRÈVE DESCRIPTION DES DESSINS

On décrira à présent, à titre d'exemples non limitatifs, des modes de réalisation de l'invention, en se référant aux dessins annexés, dans lesquels :
La figure 1, déjà décrite, est une vue schématique en coupe longitudinale selon l'axe de rotation de l'hélice d'une partie d'hélice comprenant une aube selon un exemple de réalisation de l'art antérieur ;
La figure 2 est une vue schématique en coupe longitudinale selon l'axe de rotation de l'hélice d'une partie d'hélice comprenant une aube munie d'un dispositif de retenue selon le mode de réalisation préféré de l'invention ;
La figure 3 est une vue agrandie et détaillée en coupe longitudinale selon l'axe de rotation de l'hélice d'une partie du dispositif de retenue illustré sur la figure 2 dans laquelle les moyens mobiles de retenue sont en position rétractée ;
La figure 4 est une vue agrandie et détaillée en coupe longitudinale selon l'axe de rotation de l'hélice d'une partie du dispositif de retenue illustré sur la figure 2 dans laquelle les moyens mobiles de retenue sont en position déployée ; et
La figure 5 est une vue schématique en coupe longitudinale d'une étape d'assemblage de la partie d'hélice représentée sur la figure 2.

### EXPOSÉ DÉTAILLÉ D'UN MODE DE RÉALISATION PRÉFÉRÉ

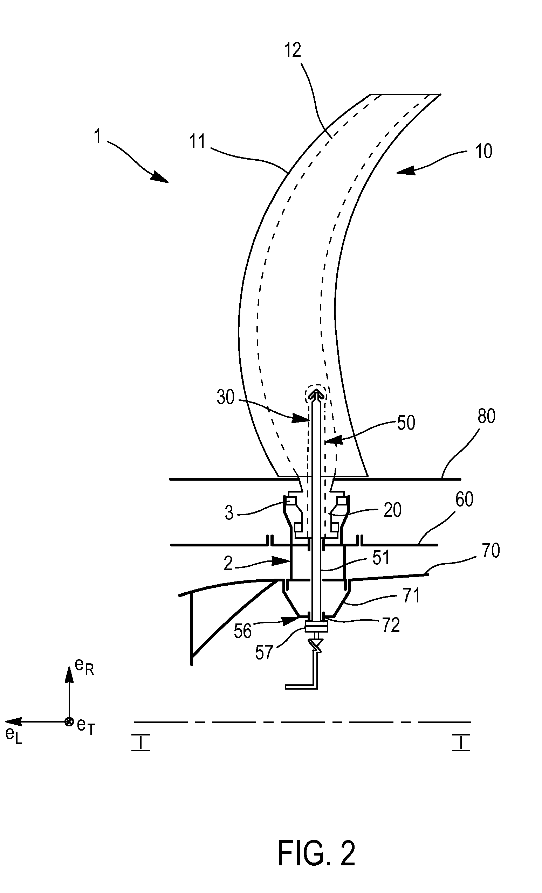

La figure 2 illustre une partie d'hélice de turbomachine d'aéronef selon le mode de réalisation préféré de l'invention.

Cette partie d'hélice comprend des éléments identiques ou similaires à ceux de la partie d'hélice illustrée sur la figure 1 relative à l'art antérieur, désignés par des références numériques identiques à celles de la figure 1.

La partie d'hélice selon la figure 2 présente une aube 1 comportant un logement 30 débouchant au niveau du pied 20 de l'aube 1 et qui s'étend à l'intérieur de l'aube 1 sur une portion de celle-ci, vers l'extérieur selon une direction sensiblement parallèle à e_{R}.

Selon le mode de réalisation préféré de l'invention, le logement 30 traverse le pied 20 suivant la direction radiale e_{R} et s'étend dans une portion de la pale 10 prolongeant ledit pied 20. Plus précisément, le logement 30 s'étend à l'intérieur de l'âme structurale creuse 12, sur une portion de celle-ci. A l'intérieur dudit pied, le logement 30 est situé suivant l'axe de révolution de la forme générale du pied 20.

Le logement 30 est délimité par une surface interne de l'aube. La surface interne délimitant le logement 30 comprend une surface intérieure du pied d'aube 20 et une surface intérieure de la pale 10.

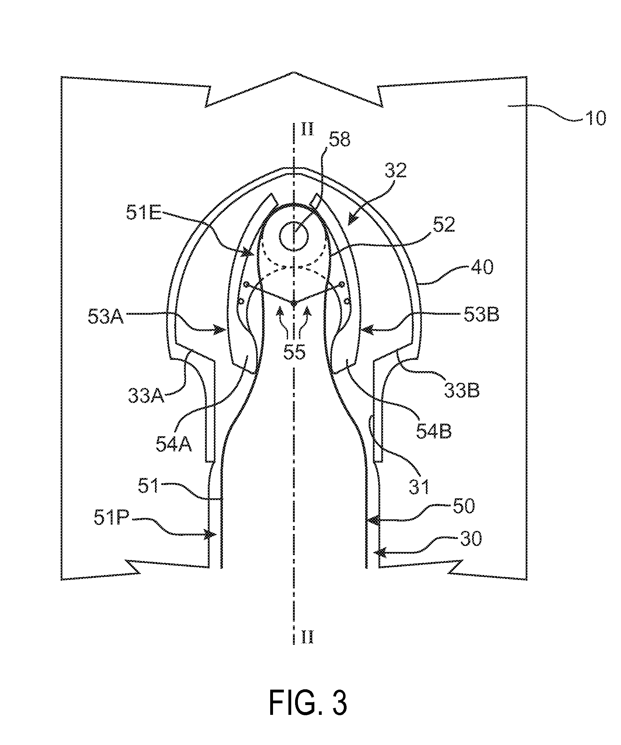

Comme le montre plus en détail la figure 3, le logement 30 présente, en son extrémité supérieure, une zone élargie 32 de retenue.

A l'intérieur de ladite zone élargie 32 de retenue est disposé un fourreau 40 de protection. Par fourreau, on entend une gaine dont la surface extérieure est disposée au contact de la surface interne de l'aube, ici de la surface intérieure de la pale.

La surface intérieure du fourreau 40 participe à délimiter le logement. Plus précisément, la surface intérieure du fourreau 40 délimite la zone élargie 32 de retenue.

Ainsi, le logement 30 est délimité par une surface interne 31 comprenant la surface intérieure du fourreau 40 dans la zone élargie 32 de retenue, et les surfaces intérieures de la pale 10 et du pied d'aube.

La surface intérieure du fourreau 40 comprend deux surfaces de butée 33A et 33B. Ces surfaces de butée 33A, 33B s'étendent de manière sensiblement transversale à la direction radiale.

En référence à la figure 3, l'aube 1 est munie d'un dispositif 50 de retenue d'aube, engagé à l'intérieur dudit logement 30.

Le dispositif 50 de retenue comprend, selon ce mode de réalisation, une tige 51 de retenue qui s'étend suivant une direction sensiblement radiale.

La tige 51 de retenue est montée en une extrémité inférieure sur le carter inférieur qui assure le support du moyeu, de manière à ne pas pouvoir être déplacée radialement vers l'extérieur.

La tige 51 de retenue comporte une extrémité supérieure 52 disposée dans ledit logement 30 et une extrémité inférieure située hors dudit logement 30.

Le dispositif 50 de retenue comprend des moyens mobiles de retenue montés rotatifs sur la tige 51 de retenue au niveau de son extrémité supérieure 52. Les moyens mobiles de retenue sont situés dans ledit logement 30, et plus précisément dans la zone élargie de retenue 32.

Lesdits moyens mobiles de retenue comprennent deux parties mobiles 53A et 53B articulées l'une à l'autre présentant chacune une portion de butée 54A, 54B. Plus précisément, les parties mobiles 53A, 53B articulées sont montées rotatives autour d'un même axe 58 sur la tige 51 de retenue.

Le dispositif 50 de retenue est équipé de moyens élastiques 55 de rappel reliés d'une part à la tige 51 de retenue, et d'autre part à chacune desdites parties mobiles 53A, 53B de retenue.

Ces moyens élastiques 55 assurent le rappel des parties mobiles 53A, 53B dans une position rétractée.

Dans cette position rétractée, chaque portion de butée 54A, 54B est située proche, ou au contact, de la tige 51 de retenue.

Les parties mobiles 53A, 53B articulées sont disposées en regard l'une de l'autre, de manière sensiblement symétrique suivant un plan de symétrie II-II sensiblement radial passant par ledit axe 58.

Il est à noter que chaque partie mobile 53A, 53B présente un centre de gravité qui n'est pas compris dans le plan de symétrie II-II.

Lorsque les parties mobiles 53A, 53B articulées sont en position rétractée, les portions de butée 54A, 54B ne sont pas en regard des surfaces de butée 33A, 33B du fourreau 40 de protection. Ainsi, les parties mobiles 53A, 53B ne forment pas butée pour l'aube dans la direction radiale vers l'extérieur.

Il est à noter que le dispositif de retenue 50 présente, au niveau desdites parties mobiles 53A, 53B en position rétractée, une dimension maximale suivant la direction transversale sensiblement inférieure à la dimension minimale dudit logement 30 suivant ladite direction transversale.

Plus précisément, la tige 51 de retenue comporte une partie principale 51P qui présente un diamètre moyen sensiblement constant et une partie d'extrémité supérieure 51E dont le diamètre est sensiblement inférieur audit diamètre moyen.

Ainsi, au niveau de la partie d'extrémité supérieure 51E de la tige 51 de retenue, le dispositif de retenue 50 présente un diamètre maximal, lorsque les parties mobiles 53A, 53B sont en position rétractée, sensiblement égal au diamètre moyen de la partie principale 51P de la tige 51 de retenue.

Ledit diamètre maximal du dispositif 50 de retenue est sensiblement inférieur au diamètre minimal du logement 30. Ainsi, le dispositif 50 de retenue peut être engagé dans le logement 30, ou désengagé, sans difficulté de manoeuvre.

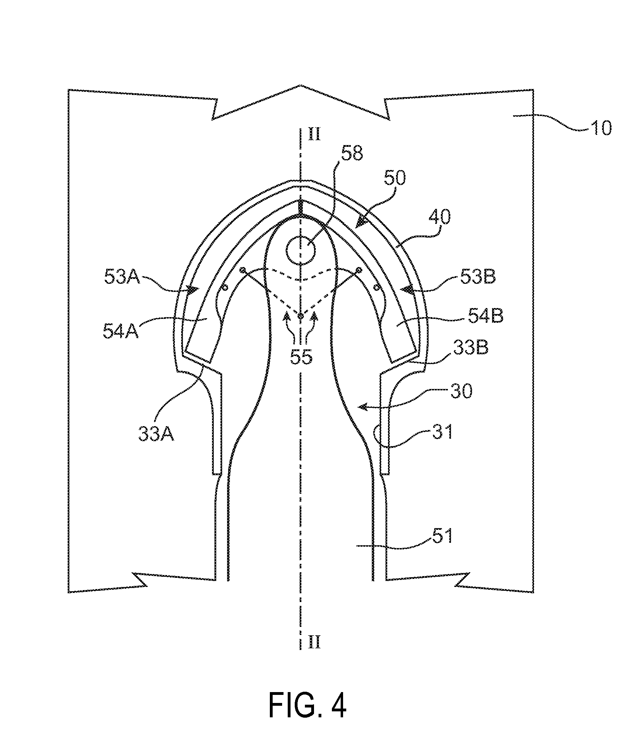

Comme le montre la figure 4, les parties mobiles 53A, 53B sont aptes à occuper une position déployée.

Dans ce cas, les portions de butée 54A, 54B sont situées au moins partiellement en regard des surfaces de butée 33A, 33B du fourreau 40 de protection.

Les parties mobiles 53A, 53B forment alors butée pour ladite aube dans ladite direction radiale vers l'extérieur. Il est dit que le dispositif 50 de retenue est actif.

Un jeu est présent entre les portions de butée 54A, 54B et les surfaces de butée 33A, 33B. Le jeu peut, alternativement, ne pas être présent.

Les portions de butée 54A, 54B sont éloignées de la tige 51 de retenue par rapport à la position rétractée. La distance du centre de gravité de chaque partie mobile 53A, 53B est alors supérieure à celle définie lorsque les parties mobiles 53A, 53B sont en position rétractée.

Dans leur position déployée, les parties mobiles 53A, 53B présentent un écartement transversal par rapport à la direction radiale e_{R}, et par rapport à la tige 51 de retenue, plus important que dans leur configuration en position rétractée.

Par écartement transversal, on entend un éloignement relatif moyen des parties mobiles l'une par rapport à l'autre dans un sens transversal par rapport à la direction radiale e_{R}. L'éloignement moyen est à comprendre en termes de distance entre les centres de gravité des deux parties mobiles 53A, 53B.

Ainsi, les parties mobiles 53A, 53B, lorsqu'elles occupent la position déployée, peuvent présenter une surface apparente plus importante que celle qu'elles présentent dans leur position rétractée.

La surface apparente peut être définie suivant ladite direction radiale par rapport au moyeu.

Les parties mobiles 53A, 53B articulées sont aptes à être déplacées de ladite position rétractée à ladite position déployée, par la force centrifuge résultant de la rotation de l'aube autour dudit axe de rotation de l'hélice.

Le fonctionnement du dispositif de retenue 50 est le suivant, en fonction de la vitesse de rotation de l'aube autour dudit axe de rotation de l'hélice.

Lorsque l'aube est au repos ou lorsqu'elle est en rotation à une vitesse insuffisante, les parties mobiles 53A, 53B sont maintenues en position rétractée par les moyens élastiques 55 de rappel.

La vitesse insuffisante est définie par rapport à une vitesse de référence pour laquelle les parties mobiles 53A, 53B sont en position déployée.

La vitesse de référence peut être une vitesse de rotation non nulle, en particulier une faible vitesse de bas régime correspondant au déplacement de l'aéronef au sol, ou une vitesse élevée de régime de croisière.

Les portions de butée 54A, 54B ne sont pas en regard des surfaces de butée 33A, 33B du fourreau. Elles sont proches voire au contact de la tige 51 de retenue.

Le dispositif 50 de retenue n'assure pas la retenue de l'aube dans la direction radiale vers l'extérieur. Le dispositif 50 de retenue est alors dit inactif.

Lorsque la vitesse de rotation de l'aube est supérieure ou égale à la vitesse de référence, les parties mobiles 53A, 53B articulées sont déplacées automatiquement de la position rétractée à la position déployée.

Le déplacement de la position rétractée à la position déployée est obtenu par la force centrifuge générée par la rotation de l'aube autour de l'axe de rotation I-I de l'hélice.

L'intensité de la force centrifuge est alors suffisante pour provoquer le déplacement des parties mobiles 53A, 53B articulées.

Lors du déplacement de ladite position rétractée à ladite position déployée, les parties mobiles 53A, 53B sont simultanément contrarotatives autour dudit axe 58.

Les portions de butée 54A, 54B sont au moins partiellement en regard des surfaces de butée 33A, 33B.

Les parties mobiles 53A, 53B forment alors butée pour l'aube dans la direction sensiblement radiale vers l'extérieur.

Le dispositif 50 de retenue est alors dit actif. La butée reste passive, ou non opérante, tant que l'aube n'est pas soumise à une sollicitation en déplacement radial vers l'extérieur à la suite d'un choc, d'une rupture ou similaire.

Dans le cas d'un choc d'un corps étranger contre l'aube, d'une rupture de l'aube, du moyeu 2 ou des moyens primaires de maintien, ou similaire, l'aube subit une sollicitation en déplacement suivant la direction radiale vers l'extérieur.

Le dispositif 50 de retenue assure la retenue de l'aube. Chaque surface de butée 33A, 33B vient au contact de la portion de butée 54A, 54B en regard, et exerce un effort sur celle-ci. La portion de butée 54A, 54B exerce en retour une réaction contre la surface de butée correspondante 33A, 33B et bloque ainsi l'aube dans la direction radiale vers l'extérieur. La butée est alors dite opérante, ou effective.

Enfin, lorsque la vitesse de rotation de l'hélice redevient inférieure à la vitesse de référence, les moyens élastiques 55 de rappel provoquent le retour des parties mobiles 53A, 53B articulées dans leur position rétractée.

L'aube peut alors être désassemblée du moyeu sans que le dispositif 50 de retenue ne bloque l'opération. Elle peut ensuite être réassemblée facilement au moyeu d'hélice.

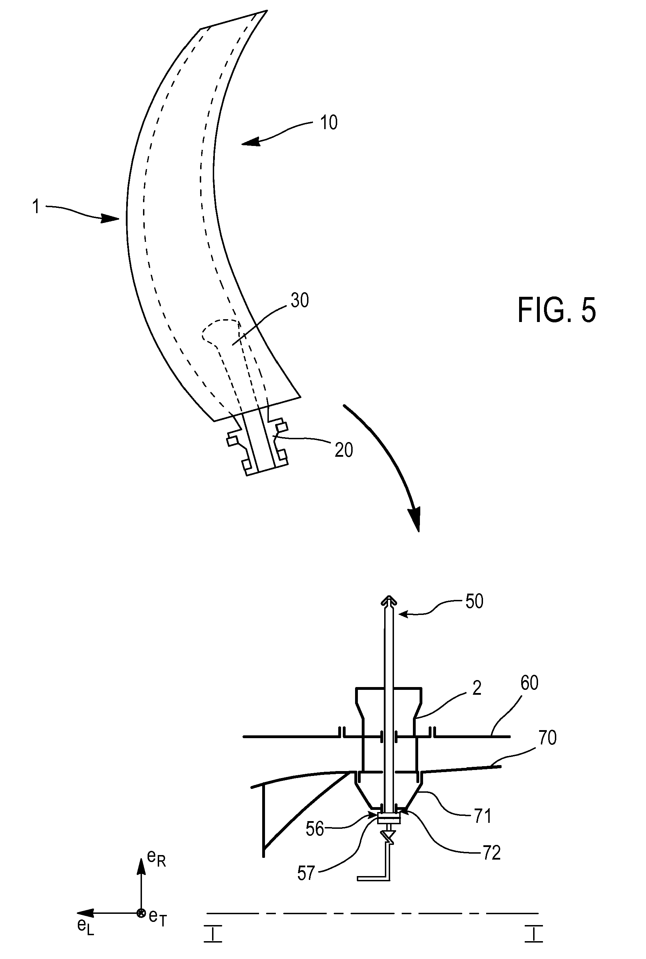

La figure 5 illustre une étape d'assemblage de ladite aube 1 sur le moyeu 2 et le dispositif de retenue.

Le procédé d'assemblage de l'aube 1 est particulièrement aisé. Dans une première étape, le dispositif 50 de retenue est monté sur le carter inférieur 70, de manière à traverser radialement vers l'extérieur le moyeu 2 d'hélice.

Puis, on approche l'aube 1 du moyeu 2 de manière à introduire le dispositif de retenue dans le logement 30 de l'aube 1.

Enfin, le pied 20 de l'aube est monté sur le moyeu 2 par l'intermédiaire des moyens primaires de maintien, dont le système de roulement à billes 3 (figure 2).

Le dispositif 50 de retenue selon l'invention présente par ailleurs un certain nombre d'avantages.

Ainsi, le dispositif de retenue permet de rigidifier la portion de l'aube 1 le recevant.

Le dispositif 50 de retenue peut s'étendre à l'intérieur de l'aube 1 sur une distance comprise entre 0,2 et 0,6 fois la longueur totale de celle-ci selon la direction radiale e_{R}. De préférence, cette distance égale environ 0,4 fois ladite longueur totale de l'aube 1.

Dans le cas de l'impact d'un corps étranger, la portion de l'aube 1 qui pourrait se désolidariser est celle ne recevant pas le dispositif 50 de retenue. Aussi, la masse de la portion désolidarisée est alors connue. La longueur du dispositif 50 de retenue à l'intérieur de l'aube 1 est définie de manière à obtenir une masse de portion d'aube désolidarisée ne présentant pas de danger pour les pièces environnantes de l'aéronef.

Concernant le fourreau de protection, il est avantageux qu'il soit réalisé dans un matériau adéquat permettant de répartir uniformément les contraintes mécaniques générées lorsque la butée décrite précédemment est opérante.

Ainsi, les contraintes sont transmises de manière sensiblement homogène à la surface intérieure de la pale, au niveau de la zone élargie de retenue. Cela permet d'éviter que ladite surface intérieure de la pale soit localement fragilisée, notamment du fait d'une éventuelle concentration des contraintes au niveau des surfaces de butée.

Un autre avantage concerne l'assemblage du dispositif de retenue au carter inférieur.

En référence aux figures 2 et 5, ledit dispositif 50 de retenue est monté, en son extrémité inférieure 56, sur ledit carter inférieur 70, de manière à éviter tout éloignement radial vers l'extérieur dudit dispositif de retenue.

Dans le cas particulier de ce mode de réalisation, le carter inférieur 70 est fixe par rapport au moyeu 2. Alternativement, il peut être rotatif autour de l'axe de rotation de l'hélice I-I, et tourner à une vitesse angulaire égale ou différente de celle du moyeu 2.

Ladite extrémité inférieure 56 du dispositif de retenue traverse le carter inférieur 70 au niveau d'une partie de maintien 71 de celui-ci, de forme en U orientée vers l'intérieur.

La partie de maintien 71 présente un orifice 72 qui s'étend de manière circonférentielle autour dudit axe de rotation de l'hélice I-I.

L'extrémité inférieure 56 du dispositif de retenue comporte une partie de butée 57, de forme sensiblement annulaire, en saillie par rapport à la surface adjacente de ladite extrémité inférieure 56.

La bordure dudit orifice 72 présente une surface formant butée située radialement vers l'extérieur par rapport à ladite partie de butée 57 du dispositif de retenue.

Ainsi, lors de l'impact d'un volatile ou de tout autre corps étranger, de la rupture du moyeu, des moyens primaires de maintien ou similaire, le dispositif de retenue subit une sollicitation en translation sensiblement radiale vers l'extérieur. La partie de butée 57 du dispositif de retenue est alors en contact contre la surface de butée du carter inférieur 70 et empêche ainsi tout éloignement radial du dispositif de retenue, et donc de l'aube 1, vers l'extérieur.

En variante non représentée du mode de réalisation préféré de l'invention, le carter inférieur 70 peut être rotatif autour de l'axe de rotation de l'hélice I-I et tourner à une vitesse angulaire égale à celle du moyeu 2.

Dans ce cas, l'orifice dans la partie de maintien du carter inférieur 70 ne s'étend pas de manière circonférentielle autour de l'axe de l'hélice I-I, mais présente une forme circulaire coaxiale à celle du dispositif de retenue.

Selon une autre variante non représentée du mode de réalisation préféré de l'invention, le dispositif de retenue est bloqué en translation vers l'extérieur sur le moyeu d'hélice et non plus sur le carter inférieur.

Le moyeu comprend alors un orifice traversé par le dispositif de retenue, dont la bordure comporte une surface formant butée. Cette surface formant butée est disposée à proximité, ou en contact, de la partie de butée du moyen de retenue, dans la direction radiale vers l'extérieur.

Selon une autre variante, le logement prévu à l'intérieur de l'aube peut s'étendre uniquement à l'intérieur du pied, sans se prolonger à l'intérieur de la pale. L'extrémité supérieure du dispositif de retenue est alors montée fixement sur ledit pied, à l'intérieur de celui-ci. Un axe de fixation traversant transversalement le pied et le moyen de retenue, similaire à ce qui a été décrit précédemment, permet d'assurer le blocage en translation radiale vers l'extérieur de l'aube vis-à-vis du moyen de retenue.

Enfin, selon d'autres modes de réalisation de l'invention, le déplacement des moyens mobiles de retenue de la position rétractée à la position déployée est réalisé par des moyens de déplacement et non par ladite force centrifuge.

Ainsi, selon un second mode de réalisation de l'invention, les moyens de déplacement des moyens mobiles de retenue sont essentiellement mécaniques. Les moyens de déplacement peuvent comprendre une vis sans fin disposée à l'intérieur de la tige de retenue, plus précisément dans un logement de la tige de retenue qui s'étend suivant le sens de la longueur de celle-ci. Les parties mobiles articulées sont assemblées à la vis sans fin, par un système d'engrenages, de sorte que la rotation dans un sens de ladite vis provoque le déplacement desdites parties mobiles de la position rétractée à la position déployée. Inversement, la rotation de ladite vis dans un sens opposé entraîne le déplacement des parties mobiles de la position déployée à la position rétractée. L'actionnement de la vis sans fin peut être effectué par un opérateur lorsque l'hélice est au repos. Il peut également être obtenu par un mécanisme électrique, l'hélice étant au repos ou en rotation.

Selon une variante du second mode de réalisation, les moyens de déplacement peuvent comprendre un actionneur fluidomécanique, par exemple du type pneumatique. Les parties mobiles sont alors assemblées à un vérin pneumatique, plus précisément à la tige du piston du vérin. La tige du piston peut être localisée à l'intérieur d'un logement de la tige de retenue qui s'étend suivant le sens de la longueur de celle-ci, et être reliée aux parties mobiles de retenue par l'intermédiaire d'un mécanisme d'engrenages. Le logement de la tige de retenue peut alors former le cylindre du vérin. La tige de piston peut alternativement être disposée dans un sens sensiblement transversal à la tige de retenue, et être localisée à proximité des parties mobiles de retenue. L'actionnement du vérin provoque le déplacement des parties mobiles de retenue de la position rétractée à la position déployée, et inversement. Les moyens élastiques de rappel pour ramener les parties mobiles de retenue dans la position rétractée peuvent alors ne plus être nécessaires.

Alternativement, les moyens de déplacement peuvent être actionnés de manière électromagnétique. Ainsi, selon un troisième mode de réalisation de l'invention, les parties mobiles de retenue sont assemblées à un actionneur électromagnétique, par exemple linéaire, tel qu'un électro-aimant, éventuellement disposé à l'intérieur de la tige de retenue, au niveau de son extrémité supérieure. Plus précisément, les parties mobiles sont assemblées à l'induit mobile de l'électro-aimant. Avantageusement, les parties mobiles de retenue sont, au repos, c'est-à-dire lorsque l'électro-aimant n'est pas alimenté en électricité, dans la position déployée, par exemple du fait de l'application d'une force de pression par des moyens élastiques. Les moyens élastiques peuvent être reliés directement aux parties mobiles de retenue, ou indirectement par l'intermédiaire de l'induit mobile. Le dispositif de retenue est alors activé. Lorsque l'électro-aimant est alimenté, le champ magnétique généré provoque le déplacement de l'induit mobile, et donc le déplacement des parties mobiles de retenue de la position déployée à la position rétractée.

Selon une variante du troisième mode de réalisation, les parties mobiles de retenue peuvent être, au repos, dans la position rétractée. La mise en oeuvre des moyens de déplacement entraîne le déplacement des parties mobiles de leur position rétractée à la position déployée.

Dans leur configuration en position déployée, les moyens mobiles de retenue présentent un écartement transversal par rapport à la direction radiale plus important que dans leur configuration en position rétractée.

D'autres actionneurs électromagnétiques peuvent également être utilisés, comme par exemple des actionneurs rotatifs mono-enroulement associés ou non à un mécanisme d'engrenages, un moteur-couple, voire un actionneur électrodynamique.

Selon une autre variante, les parties mobiles de retenue peuvent être, au repos, dans la position rétractée, sous l'effort magnétique d'un aimant passif. Lorsque l'effort centrifuge devient supérieur à un certain seuil, il est alors prépondérant vis-à-vis de l'effort magnétique et provoque le déplacement des parties mobiles de retenue de la position rétractée à la position déployée. Inversement, lorsque l'effort centrifuge devient inférieur audit seuil, l'effort magnétique devient prépondérant et provoque le déplacement des parties mobiles de retenue de la position déployée à la position rétractée.

Bien entendu, diverses modifications peuvent être apportées par l'homme du métier à l'invention qui vient d'être décrite, uniquement à titre d'exemples non limitatifs.

Par ailleurs, l'invention s'applique également aux turbopropulseurs, aux turbomoteurs, de préférence de type « open rotor ».

## Revendications

1. Hélice de turbomachine d'aéronef, comportant une pluralité d'aubes (1) comprenant chacune un pied (20) monté sur un moyeu (2) rotatif autour d'un axe de rotation (I-I) de l'hélice,
l'hélice comportant au moins une aube (1) comprenant un logement (30) débouchant radialement vers l'intérieur au niveau du pied (20) de celle-ci,
ladite hélice comprenant, en association avec ledit logement (30), un dispositif (50) de retenue d'aube, comprenant une tige de retenue (51) fixe en translation dans une direction radiale vers l'extérieur par rapport audit moyeu (2), et des moyens mobiles (53A, 53B) de retenue montés mobiles sur ladite tige de retenue (51), situés dans ledit logement (30), et aptes à occuper :
- une position rétractée dans laquelle lesdits moyens mobiles (53A, 53B) de retenue ne forment pas butée pour ladite aube (1) dans ladite direction radiale vers l'extérieur, et
- une position déployée dans laquelle lesdits moyens mobiles (53A, 53B) de retenue présentent un écartement transversal par rapport à la direction radiale plus important que dans leur configuration en position rétractée et forment butée pour ladite aube (1) dans ladite direction radiale vers l'extérieur ;
et à être déplacés de l'une à l'autre desdites positions.

2. Hélice selon la revendication 1, **caractérisée en ce que** les moyens mobiles (53A, 53B) de retenue sont aptes à être déplacés de ladite position rétractée à ladite position déployée par la force centrifuge résultant de la rotation de l'aube (1) autour dudit axe de rotation (I-I) de l'hélice.

3. Hélice selon la revendication 1 ou 2, **caractérisée en ce que** ledit logement (30) est délimité par une surface interne (31) présentant au moins une surface de butée (33A, 33B), et **en ce que** lesdits moyens mobiles (53A, 53B) de retenue comprennent au moins une portion de butée (54A, 54B), ladite portion de butée (54A, 54B) étant au moins partiellement en regard de ladite surface de butée (33A, 33B) lorsque les moyens mobiles (53A, 53B) de retenue sont en position déployée.

4. Hélice selon la revendication 3, **caractérisée en ce que** ladite surface interne (31) comporte au moins deux surfaces de butée (33A, 33B), et **en ce que** lesdits moyens mobiles (53A, 53B) de retenue comprennent au moins deux parties mobiles (53A, 53B) articulées l'une à l'autre présentant chacune une portion de butée (54A, 54B).

5. Hélice selon la revendication 4, **caractérisée en ce que** lesdites parties mobiles (53A, 53B) sont assemblées à ladite tige de retenue (51) par un axe (58), de sorte que lesdites parties mobiles (53A, 53B) sont simultanément contrarotatives autour dudit axe (55) lors du déplacement de ladite position rétractée à ladite position déployée.

6. Hélice selon l'une quelconque des revendications 3 à 5, **caractérisée en ce qu'**un fourreau de protection (40) est disposé dans ledit logement (30), dont la surface intérieure participe à délimiter ledit logement (30) et comprend ladite ou lesdites surfaces de butée (33A, 33B).

7. Hélice selon l'une quelconque des revendications 1 à 6, **caractérisée en ce que** le dispositif (50) de retenue comprend des moyens élastiques (55) de rappel desdits moyens mobiles (53A, 53B) de retenue dans ladite position rétractée.

8. Hélice selon l'une quelconque des revendications 1 à 7, **caractérisée en ce que** le dispositif (50) de retenue présente, au niveau desdits moyens mobiles (53A, 53B) en position rétractée, une dimension maximale suivant la direction transversale sensiblement inférieure à la dimension minimale dudit logement (30) suivant ladite direction transversale.

9. Hélice selon l'une quelconque des revendications 1 à 8, **caractérisée en ce qu'**elle comprend un support (70) de moyeu d'hélice disposé vers l'intérieur par rapport audit moyeu d'hélice (2), ledit dispositif (50) de retenue étant monté en une extrémité inférieure (56) sur ledit moyeu d'hélice (2) ou sur ledit support (70) de moyeu d'hélice, de manière à éviter tout déplacement sensiblement radial vers l'extérieur dudit dispositif (50) de retenue.

10. Turbomachine d'aéronef comprenant au moins une hélice selon l'une quelconque des revendications 1 à 9.

## Patentansprüche

1. Propeller für Turbotriebwerk eines Flugzeugs, umfassend eine Vielzahl Blätter (1), jedes mit einem Fuß (20), montiert in eine Nabe (2), die sich um eine Rotationsachse (I - I) des Propellers dreht,
wobei dieser Propeller wenigstens ein Blatt (1) mit einem in Höhe seines Fußes (20) radial in sein Inneres hineinragenden Sitz (30) aufweist,
und der genannte Propeller in Verbindung mit dem genannten Sitz (30) umfasst: eine Blatrückhaltevorrichtung (50) mit einer translatorisch - in einer in Bezug auf die genannte Nabe (2) radial nach außen weisenden Richtung - festen Stange (51), und bewegliche Rückhalteeinrichtungen (53A, 53B), beweglich auf die genannte Rückhaltestange (51) montiert, in dem genannten Sitz (30) befindlich und imstande :
- eine eingezogene Stellung einzunehmen, in der die genannten beweglichen Rückhalteeinrichtungen (53A, 53B) in der genannten radial nach außen weisenden Richtung keinen Anschlag für das genannte Blatt (1) bilden, und
- eine gespreizte Stellung einzunehmen, in der die genannten beweglichen Rückhalteeinrichtungen (53A, 53B) einen - in Bezug auf die radiale Richtung - größeren transversalen Abstand als in ihrer eingezogenen Stellung aufweisen und für das genannte Blatt (1) - in der genannten nach außen weisenden Richtung - einen Anschlag bilden;
und imstande, aus der einen der genannten Stellungen in die andere versetzt zu werden.

2. Propeller nach Anspruch 1, **dadurch gekennzeichnet, dass** die beweglichen Rückhalteeinrichtungen (53A, 53B) verschoben werden können - aus der genannten eingezogenen Stellung in die genannte gespreizte Stellung - durch die aus der Rotation des Blatts (1) um die genannte Rotationsachse (I - I) des Propellers resultierende Zentrifugalkraft.

3. Propeller nach Anspruch 1 oder 2, **dadurch gekennzeichnet, dass** der genannte Sitz (30) begrenzt ist durch eine Innenfläche (31) mit wenigstens einer Anschlagsfläche (33A, 33B), und dadurch, dass die genannten beweglichen Rückhalteeinrichtungen (53A, 53B) wenigstens einen Anschlagsteil (54A, 54B) umfassen, wobei der genannte Anschlagsteil (54A, 54B) wenigstens partiell der genannten Anschlagsfläche (33A, 33B) gegenübersteht, wenn die beweglichen Rückhalteeinrichtungen (53A, 53B) ihre gespreizte Stellung einnehmen.

4. Propeller nach Anspruch 3, **dadurch gekennzeichnet, dass** die genannte Innenfläche (31) wenigstens zwei Anschlagsflächen (33A, 33B) umfasst, und dass die genannten beweglichen Rückhalteeinrichtungen (53A, 53B) wenigstens zwei gelenkig miteinander verbundene bewegliche Teile (53A, 53B) umfassen, von denen jedes einen Anschlagsteil (54A, 54B) aufweist.

5. Propeller nach Anspruch 4, **dadurch gekennzeichnet, dass** die genannten beweglichen Teile (53A, 53B) mittels einer Achse (58) derart mit der Rückhaltestange (51) zusammengebaut sind, dass sich die genannten beweglichen Teile (53A, 53B) bei der Verschiebung aus der eingezogenen Stellung in die gespreizte Stellung simultan gegenläufig um die genannte Achse (58) drehen.

6. Propeller nach einem der Ansprüche 3 bis 5, **dadurch gekennzeichnet, dass** in dem genannten Sitz (30) ein Schutzgehäuse (40) vorgesehen ist, dessen Innenoberfläche Teil der Begrenzung des genannten Sitzes (30) ist und die genannte Anschlagsfläche oder Anschlagsflächen (33A, 33B) umfasst.

7. Propeller nach einem der Ansprüche 1 bis 6, **dadurch gekennzeichnet, dass** die Rückhaltevorrichtung (50) elastische Einrichtungen (55) zur Zurückhaltung der genannte beweglichen Rückhalteeinrichtungen (53A, 53B) in der genannten eingezogenen Stellung umfasst.

8. Propeller nach einem der Ansprüche 1 bis 7, **dadurch gekennzeichnet, dass** die Rückhaltevorrichtung (50) in Höhe der genannten Einrichtungen (53A, 53B) in der eingezogenen Stellung eine Maximaldimension aufweist, die gemäß der Querrichtung wesentlich kleiner ist als die Minimaldimension des genannten Sitzes (30) gemäß der genannten Querrichtung.

9. Propeller nach einem der Ansprüche 1 bis 8, **dadurch gekennzeichnet, dass** sie einen Propellernabenträger (70) umfasst, angeordnet innerhalb von der genannten Propellernabe (2), wobei die genannte Rückhaltevorrichtung (50) so an einem unteren Ende (56) in die genannte Propellernabe (2) oder in den genannten Propellernabenträger (70) montiert ist bzw. wird, dass jede im Wesentlichen radiale Verschiebung der Rückhaltevorrichtung (50) nach außen vermieden wird.

10. Flugzeugturbotriebwerk mit wenigstens einem Propeller nach einem der Ansprüche 1 bis 9.

## Claims

1. An aircraft turbomachine propeller, including multiple blades (1), each including a base (20) assembled on a hub (2) rotating around an axis of rotation (I-I) of the propeller,
the propeller comprising at least one blade (1) including a recess (30) opening radially towards the inside in the area of the base (20) thereof,
the said propeller including, in association with the said recess (30), a blade-retaining device (50) including a retaining rod (51) stationary in terms of translational motion in a radial direction towards the outside relative to the said hub (2), and moving retaining means (53A, 53B) movably mounted on the said retaining rod (51), positioned in the said recess (30), and able to occupy:
- a retracted position in which the said moving retaining means (53A, 53B) do not form a stop for the said blade (1) in the said radial direction towards the outside, and
- a deployed position in which the said moving retaining means (53A, 53B) are transversally separated by a greater distance, with respect to the radial direction, than in their retracted position, and form a stop for the said blade (1) in the said radial direction towards the outside;
and to be moved from one to the other of the said positions.

2. A propeller according to claim 1, **characterised in that** the moving retaining means (53A, 53B) are able to be moved from the said retracted position to the said deployed position by the centrifugal force resulting from the rotation of the blade (1) around the said axis of rotation (I-I) of the propeller.

3. A propeller according to claim 1 or 2, **characterised in that** the said recess (30) is demarcated by an inner surface (31) having at least one stop surface (33A, 33B), and **in that** the said moving retaining means (53A, 53B) include at least one stop portion (54A, 54B), where the said stop portion (54A, 54B) is at least partially opposite the said stop surface (33A, 33B) when the moving retaining means (53A, 53B) are in the deployed position.

4. A propeller according to claim 3, **characterised in that** the said inner surface (31) includes at least two stop surfaces (33A, 33B), and **in that** the said moving retaining means (53A, 53B) include at least two moving components (53A, 53B) connected to one another, each having a stop portion (54A, 54B).

5. A propeller according to claim 4, **characterised in that** the said moving components (53A, 53B) are assembled to the said retaining rod (51) by a pin (58), such that the said moving components (53A, 53B) are simultaneously contra-rotating around the said pin (55) when moving from the said retracted position to the said deployed position.

6. A propeller according to any one of the claims 3 to 5, **characterised in that** a protective sheath (40) is positioned in the said recess (30), the inner surface of which contributes to demarcating the said recess (30) and includes the said stop surface or surfaces (33A, 33B).

7. A propeller according to any one of the claims 1 to 6, **characterised in that** the retaining device (50) includes elastic return means (55) for returning the said moving retaining means (53A, 53B) to the said retracted position.

8. A propeller according to any one of the claims 1 to 7, **characterised in that** the retaining device (50) has, in the area of the said moving means (53A, 53B), when in the retracted position, a maximum dimension in the transverse direction which is slightly less than the minimum dimension of the said recess (30) in the said transverse direction.

9. A propeller according to any one of the claims 1 to 8, **characterised in that** it includes a propeller hub support (70) positioned towards the inside relative to the said propeller hub (2), where the said retaining device (50) is assembled at a lower end (56) on the said propeller hub (2) or on the said propeller hub support (70), so as to prevent any roughly radial movement towards the outside of the said retaining device (50).

10. An aircraft turbomachine including at least one propeller according to any one of the claims 1 to 9.
